# EUROPÄISCHE PATENTANMELDUNG

(11) **EP 2 380 762 A1**
(43) Veröffentlichungstag der Anmeldung: **26.10.2011**
(21) Anmeldenummer: 11161093.7
(22) Anmeldetag: 05.04.2011
(51) Int. Cl.: B60G 15/06

(54) **Federbeinlager und Herstellungsverfahren für ein Bauteil eines Federbeinlagers**

(30) Priorität: 21.04.2010 DE 102010015712
(71) Anmelder: Schaeffler Technologies GmbH & Co. KG, 91074 Herzogenaurach (DE)
(72) Erfinder: Zernickel, Alexander, 91074 Herzogenaurach (DE); Neuwirth, Ernst, 91074 Herzogenaurach (DE)

(57) **Zusammenfassung**

Es ist ein Federbeinlager (1) mit einem Karosserieanschlusselement (3) und einen Führungsring (5) offenbart. Zwischen dem Karosserieanschlusselement (3) und dem Führungsring (5) ist ein angeordnetes, um eine Mittelachse (7) drehbares Gleitlager (9) oder Wälzlager (11). Der Führungsring (5), der mindestens eine metallische Armierung (17) aufweist, bildet ein axiales und/oder radiales Widerlager (13) für eine Schraubenfeder (15). Des Weiteren ist ein Herstellungsverfahren für ein Bauteil eines Federbeinlagers (1) offenbart.

## Beschreibung

Die gegenwärtige Erfindung betrifft ein Federbeinlager mit einem Karosserieanschlusselement und einem Führungsring. Zwischen dem Karosserieanschlusselement und dem Führungsring ist ein angeordnetes, um eine Mittelachse drehbares Gleitlager oder Wälzlager. Der Führungsring, der mindestens eine metallische Armierung aufweist, bildet ein axiales und/oder radiales Widerlager für eine Schraubenfeder.

Ferner betrifft die gegenwärtige Erfindung ein Herstellungsverfahren für ein Bauteil eines Federbeinlagers.

Üblicherweise dient ein Federbeinlager zur Aufnahme eines Federbeins, mit dem sich insbesondere ein gelenktes Rad, beispielsweise eines Kraftfahrzeuges, gegenüber einer Karosserie abstützt. Das Federbein als solches umfasst hierbei einen teleskopartigen Stoßdämpfer mit einer in einem Zylinder beweglich geführten Kolbenstange und eine den Stoßdämpfer umgebende Schraubenfeder, die als Fahrzeugtragfeder dient. Die Schraubenfeder ist dabei zwischen dem Federteller des Federbeinlagers und einem weiteren Federteller, der mit dem Zylinder des Stoßdämpfers verbunden ist, eingespannt. Das Federbein, d. h. der Stoßdämpfer und die Schraubenfeder, sind somit gemeinsam über das Federbeinlager drehbeweglich gegen die Karosserie abgestützt. Das Federbeinlager ermöglicht eine gewisse Spielfreiheit des Federbeins einschließlich der die Schraubenfeder abstützenden Federteller gegenüber der Karosserie. Je nach Anforderung ist das Drehlager als ein Wälz- oder ein Gleitlager ausgebildet.

Ein derartiges Federbeinlager ist beispielsweise aus der deutschen Patentschriften DE 37 37 770 C2 bekannt.

Um ein Federbein hinsichtlich der versteifenden Wirkung zu beeinflussen, d.h. um beispielsweise die Federkonstante zu erhöhen, offenbart die europäische Patentanmeldung EP 2 128 464 A1 ein Druckgleitlager und ein Kombinationsmechanismus aus dem Druckgleitlager. Das Druckgleitlager umfasst ein synthetisches aus Kunstharz hergestelltes ringförmiges erstes Lagergehäuseelement mit einer ringförmigen Oberseite, einer ringförmigen Außenumfangsfläche und einer ringförmigen Unterseite. Zudem enthält das Druckgleitlager ein zweites synthetisches aus Kunstharz hergestelltes Lagergehäuseelement mit einer ringförmigen Unterseite, einer metallischen Platte als Armierungselement, die eine ringförmige untere sowie eine obere Seite aufweist. Ein synthetisches aus Kunstharz hergestelltes Druckgleitlagerstück ist zwischen der ringförmigen oberen Seite des Armierungselementes und der ringförmigen Unterseite des zweiten Lagergehäuseelementes eingefügt. Zusätzlich ist ein synthetisches aus Kunstharz hergestelltes radiales Gleitlagerstück angeordnet, dass zwischen einer ringförmigen inneren Umfangsfläche eines ersten zylindrischen Ausnehmungsteil vom Armierungselement und einer ringförmigen äußeren Umfangsfläche eines zweiten zylindrischen Ausnehmungsteils vom zweiten Lagergehäuseelement angebracht ist.

Weiterhin sind in der modernen Fahrwerkstechnik sogenannte Anschlagpuffer, auch Puffermanschetten genannt, offenbart. Der Anschlagpuffer dient dazu, bei einer starken Einfederung einen elastischen Endanschlag für das Federbein zu bilden, wobei der Zylinder des Stoßdämpfers an dem Anschlagpuffer anschlägt. Der Anschlagpuffer ist hierzu aus einem geeigneten Elastomer gefertigt.

Ein solcher Anschlagpuffer ist in der britischen Patentanmeldung GB 2 347 906 A beschrieben. Hier wird ein Federbeinlager vorgeschlagen, das eine Schraubenfederabstützfläche, ein an der Schraubenfederabstützfläche angeordnetes Wälzlager und einen an einem oberen Lagerring des Wälzlagers angeordneten metallischen Träger aufweist. Das Schraubenfederauflager ist aus Kunststoff gefertigt und mit einem nach innen gerichteten radialen Vorsprung ausgebildet, auf dem sich der oben beschriebene Anschlagpuffer abstützt, um den Weg der Stoßdämpferkolbenstange im Fall eines starken Einfederns zu begrenzen. Auf diese Weise wird ein Aufstoßen der Stoßdämpferkolbenstange auf den Boden des Stoßdämpferzylinders vermieden. Die Lagerringe des Wälzlagers sind als Blechstanz- und -biegeteile gefertigt.

Bei derartigen im Stand der Technik bekannten Federbeinlagern wird allerdings das Wälzlager im Allgemeinen nicht von demselben Hersteller geliefert wie der obere Stoßdämpferblock, zu dem das obere Stützelement gehört. Die Konstruktion des Wälzlagers erlaubt nur unter Schwierigkeiten einen Transport ohne die Gefahr eines unbeabsichtigten Auseinanderfallens meiden zu können. Darüber hinaus reicht die Festigkeit des Schraubenfederlagers im Falle eines übermäßigen Einfederns gelegentlich nicht aus.

Daher sind auch Federbeinlager bekannt, wie beispielsweise in der deutschen Offenlegungsschrift DE 100 42 677 A1 offenbart, zu dem ein Wälzlager mit spangebend gefertigten einstückigen Lagerringen gehört, um einen Verlust von Elementen während des Transportes der Federbeinlager vor deren Einbau in das Federbein zu verhindern. Derartige Federbeinlager sind aber kostenintensiv und keineswegs dazu vorgesehen mit einem Anschlagpuffer zusammenzuwirken.

Die deutsche Gebrauchsmusterschrift DE 20 2004 011 432 U1 beschreibt eine gegen unbeabsichtigtes Auseinanderfallen geschützte Federbeinlagerung. Zu der Federbeinlagerung gehört ein Wälzlager, das ein axiales Widerlager bildet, das auf einem unteren Stützteller für eine Schraubenfeder angeordnet ist. Der Teller ist in der Lage, seine Rotationsstellung zusammen mit der Schraubenfeder zu ändern. Das Wälzlager enthält einen oberen Lagerring und einen unteren Lagerring, der mit dem unteren Teller in Berührung steht. Das Widerlager ist mit Mitteln ausgestattet, um das Wälzlager mit dem unteren Teller zusammenzuhalten. Zu dem unteren Teller gehört ein Grundkörper aus verformbaren Kunststoff und eine in den Grundkörper eingebettete metallische Verstärkungseinlage, wobei der Grundkörper eine untere Stützfläche für einen Anschlagpuffer aufweist und die untere Fläche einen kleineren Durchmesser aufweist als der Durchmesser eines Abstützbereiches des unteren Lagerrings des Wälzlagers auf dem unteren Teller. Der Anschlagpuffer selbst kann in eine zylindrische Bohrung gesteckt sein, die in einem Vorsprung enthalten ist, der sich axial nach unten erstreckt und einen Teil des Grundkörpers bildet, oder in die zylindrische Bohrung eines sich radial nach innen erstreckenden Vorsprungs, indem der untere Teller mit einer tiefgezogenen Metalleinlage ausgestaltet ist. Auf diese Weise ist ein robuster Teller geschaffen, der dafür geeignet ist, um die Axialkräfte aufzunehmen, die auf die untere Fläche in der Nähe eines Innenrades ausgeübt werden.

Trotz dieser bereits auf die hohen Ansprüche angepassten Bauweisen von Federbeinlagern gewinnt der Kosten-Nutzen-Faktor an zunehmender Bedeutung, wobei insbesondere durch die Mitwirkung verschiedenster Hersteller durch diverse Einzelteilanfertigungen an einem Federbein hohe Kosten verursacht werden. Zudem werden Einzelteile, die ein Federbeinlager hinsichtlich der Einsatzfunktionen unterstützen, oft aufgrund zu hoher Montagekosten weggelassen.

Aufgabe der gegenwärtigen Erfindung ist, ein Federbeinlager zu schaffen, das sich kostengünstig und einfach herstellen lässt, wobei zugleich geräuschdämmende und versteifende Eigenschaften durch das Federbeinlager erfüllt sind.

Die obige Aufgabe wird durch ein Federbeinlager gelöst, das die Merkmale im Anspruch 1 umfasst.

Eine weitere Aufgabe der Erfindung ist, ein Herstellungsverfahren für ein Bauteil eines Federbeinlagers anzugeben, das kostengünstig und einfach einen Führungsring herstellt, mit dem zugleich geräuschdämmende und versteifende Eigenschaften durch das Federbeinlager erfüllt werden.

Die obige Aufgabe wird durch ein Herstellungsverfahren gelöst, das die Merkmale im Anspruch 9 umfasst.

Das Federbeinlager der gegenwärtigen Erfindung umfasst ein Karosserieanschlusselement und einen Führungsring. Zwischen dem Karosserieanschlusselement und dem Führungsring ist ein angeordnetes, um eine Mittelachse drehbares Gleitlager oder Wälzlager. Der Führungsring, der mindestens eine metallische Armierung aufweist, um eine größere Widerstandsfähigkeit gegenüber den mechanischen Belastungen beim Einsatz eines Federbeinlagers zu gewährleisten, bildet ein axiales und beziehungsweise oder radiales Widerlager für eine Schraubenfeder.

Erfindungsgemäß ist der Führungsring, der vorzugsweise aus Kunststoff gefertigt ist, als ein einstückiges Bauteil gebildet, der mindestens eine Dämmschicht und die mindestens eine metallische Armierung umfasst. Aufgrund der Ausgestaltung als ein einstückiges Bauteil sind der Führungsring, die mindestens eine metallische Armierung und die mindestens eine Dämmschicht untrennbar miteinander verbunden.

Vorteilhafterweise ist daher die mindestens eine metallische Armierung mit dem Material des Führungsrings umspritzt und die mindestens eine Dämmschicht an dem Führungsring angespritzt, wobei die Vorteile der Erfindung besonders stark hervortreten, wenn die mindestens eine Dämmschicht aus einem weicheren Kunststoffmaterial als die des Führungsrings besteht. Ferner hat die mindestens eine Dämmschicht die Eigenschaft, dass sie eine schwingungsdämmende bzw. geräuschdämmende Wirkung zwischen der Schraubenfeder und dem Federbeinlager beispielsweise beim Einsatz eines Kraftfahrzeuges, wobei sich ein Stoßdämpfer und die Schraubenfeder gemeinsam über das Federbeinlager drehbeweglich gegenüber der Fahrzeugkarosserie abstützen, erzielt.

Derartige Verfahren von Umspritzen und Anspritzen von Bau- und Formteilen sind in vielfältiger Form und Ausführung auf dem Markt bekannt und gebräuchlich. Sie werden häufig dann eingesetzt, wenn an die Bau- und Formteile hohe Anforderungen gestellt werden und ein Werkstoff allein diese nicht mehr erfüllen kann.

Von besonderem Interesse ist hier die Kunststoff-Metall-Verbindung, d. h. die Verbindung der mindestens einen metallischen Armierung mit dem Material des Führungsrings, die durch einen Umspritzvorgang die Herstellung eines komplexen und montagefertigen Bauteils in einem Fertigungsschritt ermöglicht. Ferner ist auch erkennbar, dass durch den oben beschriebene Anspritzvorgang, d. h. die Verbindung der mindestens einen Dämmschicht an den Führungsring mit der bereits mindestens einen eingebetteten metallischen Armierung, sämtliche den Führungsring betreffende Arbeitsvorgänge in einem kontinuierlichen Arbeitsprozess mittels eines Spritzgusswerkzeuges durchführbar sind, wie beispielsweise durch ein Mehr-Komponenten-Spritzgießverfahren.

Bei Mehr-Komponenten-Spritzgießverfahren gibt es verschiedene Arten des Spritzgießens, denen allen gemeinsam ist, dass Spritzgusswerkzeuge mit zwei oder auch mehreren Spritzeinheiten aber gegebenenfalls nur einer Schließeinheit benötigt werden. Die Spritzeinheiten müssen harmonierend arbeiten aber immer unabhängig voneinander steuerbar sein. Die Komponenten können durch eine Spezialdüse eingespritzt oder an verschiedenen Stellen ins Werkzeug eingebracht werden.

Es ist für den Fachmann selbstverständlich, dass bei der Erfindung auch andere Komponentenverbindungsverfahren anwendbar sind, da die Kunststoff- als auch Metallverarbeitungstechnik weitere für die Erfindung einsetzbare Verfahren zur untrennbaren Verbindung von Bau- und Formteilen im Stand der Technik offenbart.

Bei einer ersten Ausführungsform der Erfindung ist die mindestens eine Dämmschicht radial zur Mittelachse des Federbeinlagers ausgerichtet. Die Dämmschicht bildet somit ein radiales Widerlager für die Schraubenfeder des Federbeins. Ebenso ist denkbar, dass bei einer weiteren Ausführungsform der Erfindung die mindestens eine Dämmschicht radial und axial zur Mittelachse des Federbeinlagers ausgerichtet ist. Die Dämmschicht bildet somit ein radiales und axiales Widerlager für die Schraubenfeder des Federbeins. Zum einen lassen sich aufgrund der Anordnung der mindestens einen Dämmschicht als Widerlager die Herstellkosten senken, da zur Herstellung eines solchen Federbeinlagers relativ einfache Werkzeuge und Verfahren verwendet werden können. Zum anderen wird nach der ersten Ausführungsform in radialer Richnen. Zum anderen wird nach der ersten Ausführungsform in radialer Richtung zur Mittelachse bzw. nach der zweiten Ausführungsform in radialer und axialer Richtung zur Mittelachse eine wie bereits oben beschrieben schwingungsdämmende bzw. geräuschdämmende Wirkung zwischen einer Schraubenfeder und dem Federbeinlager erzielt.

Für den Fall, dass das Federbeinlager ein Gleitlager umfasst, ist dem Gleitlager ein zugeordnetes Gleitelement radial und axial zur Mittelachse des Federbeinlagers angeordnet, so dass das Federbeinlager axiale und beziehungsweise oder radiale Kräfte aufnimmt. Solche Gleitelemente sind hinreichend im Stand der Technik offenbart, so dass das Federbeinlager für mittlere bis hohe Belastungen ausgelegt ist.

Das Herstellungsverfahren des erfindungsgemäßen Bauteil eines Federbeinlagers ist dadurch gekennzeichnet, dass mindestens eine metallische Armierung mit dem Material eines Führungsrings umspritzt wird. Anschließend wird mindestens eine Dämmschicht als axiales und beziehungsweise oder radiales Widerlager für eine Schraubenfeder an den Führungsring angespritzt, wobei das Umspritzen der mindestens einen Armierung und das Anspritzen der mindestens einen Dämmschicht in einem Spritzgusswerkzeug ausgeführt werden. Vorteilhafterweise wird das Umspritzen und Anspritzen durch ein Mehr-Komponenten-Spritzgießverfahren in einem Werkzeug erwirkt.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Figur 1: eine erste Ausführungsform des erfindungsgemäßen Federbeinlagers mit einem Gleitlager in einem Längsschnitt entlang der Mittelachse;
- Figur 2: eine zweite Ausführungsform des erfindungsgemäßen Federbeinlagers mit einem Gleitlager in einem Längsschnitt entlang der Mittelachse;
- Figur 3: ein erfindungsgemäßes Federbeinlager mit einem Wälzlager in einem Längsschnitt entlang der Mittelasche.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Federbeinlager und das erfindungsgemäße Herstellungsverfahren für ein Bauteil einer Federbeinlagers ausgestaltet sein können stellen somit keine abschließende Begrenzung der Erfindung dar.

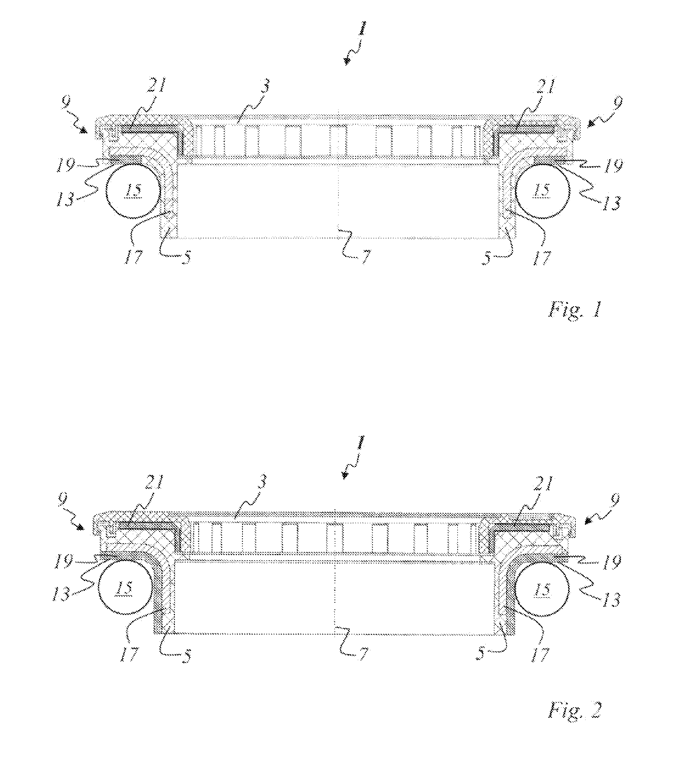

**Figur 1** zeigt eine erste Ausführungsform des erfindungsgemäßen Federbeinlagers 1 mit einem Gleitlager 9 in einem Längsschnitt entlang der Mittelachse 7, wobei das Federbeinlager 1 ein Karosserieanschlusselement 3 und einen Führungsring 5 umfasst. Dem Gleitlager 9 ist dabei ein radial und axial zur Mittelachse 7 des Federbeinlagers 1 angeordnetes Gleitelement 21 zugeordnet, so dass das Federbeinlager 1 axiale und beziehungsweise oder radiale Kräfte aufnimmt. Der Führungsring 5 weist eine metallische Armierung 17 auf, so dass eine größere Widerstandsfähigkeit gegenüber den mechanischen Belastungen beim Einsatz eines Federbeinlagers 1 gewährleistet ist. Ferner enthält das Federbeinlager 1 eine Dämmschicht 19, die radial zur Mittelachse 7 des Federbeinlagers 1 ausgerichtet ist und ein Widerlager 13 für die Schraubenfeder 15 bildet, um in axialer Richtung zwischen einer Schraubenfeder 15 und dem Federbeinlager 1 eine schwingungsdämmende bzw. geräuschdämmende Wirkung zu erzielen.

Der Führungsring 5 ist dabei derart durch ein Herstellungsverfahren als ein einstückiges Bauteil ausgebildet, dass die metallische Armierung 17 mit dem Kunststoffmaterial des Führungsrings 5 umspritzt wird und die Dämmschicht 19, die aus einem weicheren Kunststoffmaterial als die des Führungsrings 5 besteht, an den Führungsring 5 angespritzt wird, so dass eine untrennbare Verbindung geschaffen ist.

Auf der Grundlage, dass das Umspritzen der metallischen Armierung 17 und das Anspritzen der Dämmschicht 19 in einem Spritzgusswerkzeug ausgeführt werden kann, wie beispielsweise durch ein Mehr-Komponenten-Spritzgießverfahren, ergibt sich ein komplexer und montagefertiger Führungsring.

**Figur 2** zeigt eine zweite Ausführungsform des erfindungsgemäßen Federbeinlagers 1 mit einem Gleitlager 9 in einem Längsschnitt entlang der Mittelachse 7, wobei hier eine Dämmschicht 19 radial und axial zur Mittelachse 7 des Federbeinlagers 1 ausgerichtet ist, aber auch hier das Widerlager 13 für eine Schraubenfeder 15 bildet, so dass zwischen einer Schraubenfeder 15 und dem Federbeinlager 1 in beide Richtungen, d. h. in radialer und axialer Richtung zur Mittelachse 7, eine schwingungsdämmende bzw. geräuschdämmende Wirkung erzielt ist.

Die in dieser Ausführung zu entnehmenden Merkmale einschließlich ihrer Bezugszeichen sind identisch mit der Ausführungsform nach Figur 1 und sind dieser daher zu entnehmen.

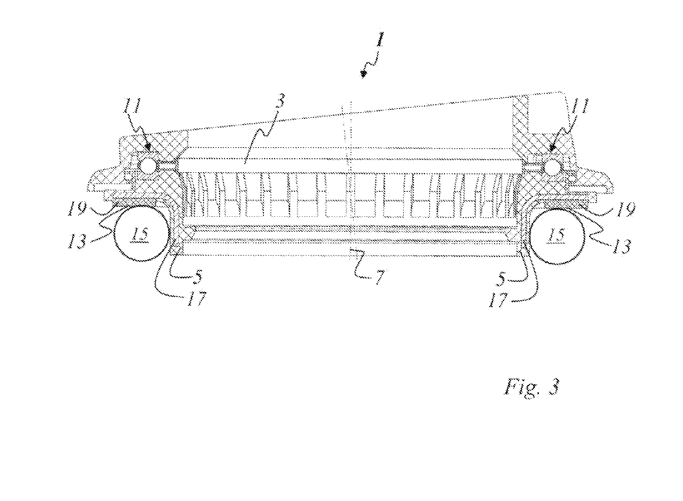

**Figur 3** zeigt ein erfindungsgemäßes Federbeinlager 1 mit einem Wälzlager 11 in einem Längsschnitt entlang der Mittelachse 7, wobei die in dieser Ausführung zu entnehmenden Bezugszeichen identisch mit dem erfindungsgemäßen Federbeinlager 1 nach Figur 1 sind und sind dieser daher zu entnehmen.

Die gegenwärtige Erfindung ist in Bezug auf bevorzugte Ausführungsformen beschrieben worden. Dennoch können Änderungen und Abwandlungen der hier vorgeschlagenen Gestaltungen des Federbeinlagers und des Herstellungsverfahrens für ein Bauteil eines Federbeinlagers durchgeführt werden, ohne dabei den Schutzbereich der nachstehenden Ansprüche zu verlassen.

### Bezugszeichenliste

- 1: Federbeinlager
- 3: Karosserieanschlusselement
- 5: Führungsring
- 7: Mittelachse
- 9: Gleitlager
- 11: Wälzlager
- 13: Widerlager
- 15: Schraubenfeder
- 17: Armierung
- 19: Dämmschicht
- 21: Gleitelement

## Patentansprüche

1. Federbeinlager (1) umfassend ein zwischen einem Karosserieanschlusselement (3) und einem Führungsring (5) angeordnetes, um eine Mittelachse (7) drehbares Gleitlager (9) oder Wälzlager (11), wobei der Führungsring (5), der mindestens eine metallische Armierung (17) aufweist, ein axiales und/oder radiales Widerlager (13) für eine Schraubenfeder (15) bildet, **dadurch gekennzeichnet, dass** der Führungsring (5) ein einstückiges Bauteil ist, der mindestens eine Dämmschicht (19) und die mindestens eine metallische Armierung (17) umfasst.

2. Federbeinlager (1) nach Anspruch 1, wobei der Führungsring (5), die mindestens eine metallische Armierung (17) und die mindestens eine Dämmschicht (19) untrennbar miteinander verbunden sind.

3. Federbeinlager (1) nach Anspruch 1 oder 2, wobei die mindestens eine Dämmschicht (19) an dem Führungsring (5) angespritzt ist.

4. Federbeinlager (1) nach Anspruch 1 bis 3, wobei die mindestens eine Dämmschicht (19) radial zur Mittelachse (7) des Federbeinlagers (1) ausgerichtet ist und dass die mindestens eine Dämmschicht (19) das Widerlager (13) für die Schraubenfeder (15) bildet.

5. Federbeinlager (1) nach Anspruch 1 bis 3, wobei die mindestens eine Dämmschicht (19) radial und axial zur Mittelachse (7) des Federbeinlagers (1) ausgerichtet ist und dass die mindestens eine Dämmschicht (19) das Widerlager (13) für die Schraubenfeder (15) bildet.

6. Federbeinlager (1) nach Anspruch 1 bis 5, wobei die mindestens eine Dämmschicht (19) aus einem weicheren Kunststoffmaterial als die des Führungsrings (5) besteht.

7. Federbeinlager (1) nach Anspruch 1 oder 2, wobei die mindestens eine metallische Armierung (17) mit dem Material des Führungsrings (5) umspritzt ist.

8. Federbeinlager (1) nach Anspruch 1, wobei ein dem Gleitlager (9) zugeordnetes Gleitelement (21) radial und axial zur Mittelachse (7) des Federbeinlagers (1) angeordnet ist, so dass das Federbeinlager (1) axiale und/oder radiale Kräfte aufnimmt.

9. Herstellungsverfahren für ein Bauteil eines Federbeinlagers (1) **gekennzeichnet durch** die folgende Schritte:
• dass mindestens eine metallische Armierung (17) mit dem Material eines Führungsrings (5) umspritzt wird; und
• dass mindestens eine Dämmschicht (19) als axiales und/oder radiales Widerlager (13) für eine Schraubenfeder (15) an den Führungsring (5) angespritzt wird; wobei das Umspritzen der mindestens einen metallischen Armierung (17) und das Anspritzen der mindestens einen Dämmschicht (19) in einem Spritzgusswerkzeug ausgeführt werden.

10. Herstellungsverfahren nach Anspruch 1, wobei das Umspritzen und Anspritzen mit einem Mehr-Komponenten-Spritzgießverfahren in einem Werkzeug durchgeführt wird.
